# EUROPÄISCHE PATENTSCHRIFT

(11) **EP 1 391 081 B1**
(45) Veröffentlichungstag und Bekanntmachung des Hinweises auf die Patenterteilung: **02.12.2009**
(21) Anmeldenummer: 02722015.1
(22) Anmeldetag: 27.03.2002
(51) Int. Cl.: H04L 12/28

(54) **HETEROGENES MOBILFUNKSYSTEM**
HETEROGENEOUS MOBILE RADIO SYSTEM
SYSTEME RADIO MOBILE HETEROGENE

(30) Priorität: 24.04.2001 DE 10120772
(43) Veröffentlichungstag der Anmeldung: 25.02.2004
(73) Patentinhaber: SIEMENS AKTIENGESELLSCHAFT, 80333 München (DE)
(72) Erfinder: HAHN, Wolfgang, 16562 Bergfelde (DE)
(86) Internationale Anmeldenummer: PCT/DE2002/001144
(87) Internationale Veröffentlichungsnummer: WO 2002/087160

(56) Entgegenhaltungen:
- EP-A- 0 917 320
- EP-A- 0 924 914
- EP-A- 0 936 777
- EP-A- 1 047 279
- WO-A-00/76145
- AKYILDIZ I F ET AL: "MOBILITY MANAGEMENT IN CURRENT AND FUTURE COMMUNICATIONS NETWORKS" IEEE NETWORK, IEEE INC. NEW YORK, US, Bd. 12, Nr. 4, Juli 1998 (1998-07), Seiten 39-49, XP000875304 ISSN: 0890-8044

## Beschreibung

Die vorliegende Erfindung betrifft ein heterogenes Mobilfunksystem mit mindestens einem ersten und einem zweiten Mobilfunknetz, wobei jedes der beiden Mobilfunknetze jeweils einen zugangsknoten zu einem Paketdatennetz aufweist. Öffentliche Mobilfunknetze, insbesondere 2G/3G Netze, sind dafür ausgelegt, Dienste in möglichst weiten Teilen eines Landes anzubieten. Dabei kann der Fall eintreten, dass in bestimmten Gebieten, d.h. in bestimmten Zellen, insbesondere bei einer hohen Teilnehmerdichte innerhalb dieser Gebiete bzw. Zellen die angebotene Kapazität für die angeforderten Dienste nicht ausreicht. Das Problem wird zudem noch dadurch verstärkt, dass durch die mobilen Zugangssysteme zum Internet, wie beispielsweise durch den Paketdatendienst GPRS (General Packet Radio Service) in Mobilfunknetzen nach dem GSM-Standard oder UMTS (Universal Mobil Telecommunications System) neue Dienste bzw. Services mit hohen Bandbreiten, wie beispielsweise Multimedia, ermöglicht werden.

Das Problem tritt verstärkt auf in Orten und Gebäuden wie beispielsweise Flughäfen oder Messen, bei denen meist auch von einer geringeren Bewegungsgeschwindigkeit der Teilnehmer ausgegangen werden kann. Hier könnten beispielsweise die zwei im folgenden beschriebenen Ansätze zur Lösung des genannten Problems führen.

Es wäre denkbar kleinste, d.h. micro oder pico Zellen in der selben Technologie wie das Gesamtnetz zu installieren, beispielsweise in Kombination mit Overlay- bzw. Umbrella-Zellen. Bei dieser Vorgehensweise würde der Teilnehmer nichts von dem Eingriff, d.h. von der Installation der zusätzlichen Zellen in das Gesamtnetz merken, d.h. die Installation wäre für den Teilnehmer des Mobilfunknetzes völlig transparent. Zudem würde sich die Installation derartiger kleinster Zellen für den Netzwerkoperator des Mobilfunknetzes nahtlos in sein Betriebskonzept einfügen. Es gäbe keine Übermittlungsverluste oder ungewollte Unterbrechungen bei der Übermittlung. Im Allgemeinen wären zudem keine gesonderten Maßnahmen zur Vergebührung und/oder Authentifizierung des entsprechenden Teilnehmers des Mobilfunknetzes erforderlich. Allerdings wäre die Installation derartiger kleinster Zellen in das Gesamtsystem sehr teuer. Es handelt sich um sehr teure Radiotechnologie, da eine sehr hohe Mobilität unterstützt wird. Zudem könnte das Netz womöglich stark mit Signalisierungsverkehr belastet werden, da es aufgrund der kleinen Zellen zu einer Vielzahl von Händovers zwischen den Zellen kommt. Dabei könnte die Radiotechnologie an ihre Grenze stoßen, insbesondere bzgl. der Übermittlungsfrequenzen.
Ferner wäre es denkbar, ein alternatives drahtloses Zugangssystem zum Internet zu installieren. Hierbei könnte es sich beispielsweise um ein Wireless LAN (Local Area Network), um Bluetooth oder ähnliche Systeme handeln. Der Vorteil hierbei wäre darin zu sehen, dass tatsächlich zusätzliche Übertragungskapazität geschaffen wird. Zudem ist die Installation derartiger alternativer Systeme im Allgemeinen nicht so kostenaufwendig wie die erwähnte Installation kleinster Zellen. Nachteilig dabei ist allerdings die Tatsache, dass kein bzw. ein nur eingeschränkt nahtloser Übergang aus dem 2G/3G'Mobilfunknetz auf das alternative Mobilfunknetz möglich ist. Das bedeutet, dass Verluste und Unterbrechungen bei der Übermittlung auftreten könnten. Im Falle, dass das WLAN (Wireless LAN) beispielsweise zu einem anderen Netzwerkoperator gehört als das 2G/3G Mobilfunknetz muss der Teilnehmer sich bei dem WLAN ein zweites Mal authentifizieren, d.h. die Installation eines alternativen Mobilfunknetzes ist für den Teilnehmer nicht transparent. Wird hingegen das WLAN von demselben Netzwerkoperator betrieben wie das 2G/3G Mobilfunknetz, so muss dieser zum Betrieb zumindest neue Methoden zur Authentifizierung und zur Vergebührung einführen, was die Betriebskosten des Systems erhöhen würde.

Bislang wurden üblicherweise Lösungen auf IP-Layern gewählt, um heterogene Mobilfunksysteme, wie beispielsweise eine Kombination eines 2G/3G Mobilfunknetz mit einem WLAN, welche IP Verkehr realisieren, zu kreieren. Mit IP Layer werden dabei Protokolle der Internet Protokoll (IP) Familie bezeichnet, die unabhängig von der Übertragungstechnik (z.B. LAN oder WAN) und der Zugriffstechnik (Mobilfunk, Festnetz) sind. Eine der am meisten dabei diskutierten Lösungen ist das Mobile IP entsprechend beispielsweise RFC2002 für IP-v4. In 3GPP 2G/3G Netzen ist der Internetzugang meist entsprechend 3GPP TS23.060 realisiert. Es werden dabei Zugangsknoten (GGSN: Gateway GPRS Support Nodes) bereitgestellt, die jeweils den Zugang zu dem Internet realisieren und das entsprechende Internet Protokoll (IP) unterstützen. Dabei ist am GGSN ein fester Bezugspunkt für das Internet vorgesehen, an dem jeder Teilnehmer mit einer IP Adresse erreichbar ist. Innerhalb des Kernnetzes, d.h. innerhalb des eigentlichen Mobilfunknetzes wird die Mobilität zwischen den Zugangsnetzknoten (GGSN) und vorhandenen Dienstenetzknoten (Service GPRS Support Node: SGSN) über GTP Tunnel realisiert. Die gesamte Verbindung zwischen einem mobilen Terminal (MT) bis zum Zugangsknoten GGSN mitsamt den die Verbindung beschreibenden Steuerdaten wird als Paket Daten Protokoll (PDP) Kontext bezeichnet. Ein Teilnehmer ist über eine feste IP Adresse, die ihm beispielsweise von einem Internet Service Provider (ISP) zur Verfügung gestellt wird für korrespondierende Teilnehmer erreichbar. Bucht sich dieser Teilnehmer nun in ein 2G/3G Netz ein, so erhält er von einem Internet Service Provider eine vorzugsweise dynamische IP Adresse. Dabei können dieser Internet Service Provider und der Mobilfunkoperator des 2G/3G Netzes organisatorisch identisch sein. Um einen Wechsel des Teilnehmers zwischen dem 2G/3G Netz und dem WLAN mittels Mobile IP zu realisieren, würde folgendes Vorgehen notwendig sein: Mit seiner IP Adresse aus dem 2G/3G Mobilfunk Netz muss sich der Teilnehmer bei seinem Home Agent im Internet registrieren. Dieser Home Agent (HA) kann von einem zweiten (Heimat-) ISP bereitgestellt werden. An diesem HA ist der Teilnehmer über eine feste IP Adresse oder eine andere Identifikation im Netzwerk des zweiten ISP erreichbar. Über einen Mobilen IP (MIP) Tunnel werden dann die Datenpakete vom Home Agent zum Zugangsknoten GGSN der IP Adresse des Teilnehmers im 2G/3G Mobilfunknetz getunnelt. Damit die Pakete zu dem mobilen Terminal (MT) des Teilnehmers gelangen, muss in dem GGSN ein Foreign Agent (FA) vorhanden sein, der die Einkapselung der zum GGSN getunnelten Pakete aufhebt und dem mobilen Terminal, dem eine feste Home Adresse zugeordnet ist, zustellt. Bucht sich der Teilnehmer im WLAN ein und ist in einem WLAN Controller, der als Zugangsknoten zum Internet fungiert, ebenfalls ein Foreign Agent (FA) vorhanden, so kann der Home Agent im Internet die Pakete mittels Mobile IP (MIP) auch direkt zum WLAN Controller weiterleiten. Der Vorteil dieser Lösung ist, dass der Teilnehmer beim Wechsel der Systeme seine IP Adresse beibehalten kann, wodurch viele Anwendungen nicht unterbrochen werden müssen. Nachteilig ist allerdings, wie bereits eingangs erläutert, dass im Bereich des WLAN neue Methoden bzw. Maßnahmen zur Zugangsberechtigungskontrolle und Vergebührung eingeführt bzw. vorgenommen werden müssen. Soll dabei der mögliche Wechsel der beiden Mobilfunknetze bzw. der beiden Zugangssysteme, wie hier beschrieben zwischen 2G/3G Mobilfunknetz und WLAN, als ein Service des Netzwerkoperators des 2G/3G Mobilfunknetzes angeboten werden, muss dieser auch den Home Agent sowie für seine Teilnehmer Home IP Adressen bereitstellen, da der Home Agent steuert bzw. routet, wie die Pakete zum MT gelangen. Zudem ist eine Korrelation der Teilnehmeridentifikationen und Vergebührungsdaten der jeweiligen Netze vorzunehmen. Es kommt somit zu einem beträchtlichen Betreiberaufwand. Ferner kommt es womöglich zu größeren Umschaltzeiten auf Grund des Protokolls, denn Registrierungsdaten und Authentifizierungsdaten müssen zwischen MT, FA und Servern zur Authentifizierung, Autorisierung und Vergebührung (AAA)und HA ausgetauscht werden. Auch eine große Entfernung zwischen dem Home Agent und den lokalen Netzen, in denen sich der mobile Teilnehmer aufhält, kann zu größeren Umschaltzeiten führen.

Aus der Druckschrift EP 1057279 A2 ist ein Mobilfunksystem bekannt, bei dem ein mobiles Terminal von einem Kommunikationspartner gesendete Daten kurzzeitig über zwei Basisstationen verschiedener Funkzellen, aber desselben Funknetzes empfängt, um so Datenverluste während eines Handover-Vorgangs zu vermeiden. Das beschriebene Mobilfunksystem erlaubt jedoch nicht in einem ersten Mobilfunknetz verfügbare Dienste für ein anderes Mobilfunknetz, das diese Dienste nicht aufweist, zu nutzen.

Weiterhin ist aus der Offenlegungsschrift WO 00/76145 A1 ein heterogenes Mobilfunksystem bekannt, wobei ein GPRS-Netz mit einem lokalen Netz verbunden ist und dem lokalen Netz mittels eines spezifischen Netzelementes GPRS-Dienste zugänglich gemacht werden können.

Darüber hinaus offenbart die Druckschrift EP 917320 A2 ein Routing-System für ein Mobilfunksystem, das darauf abzielt möglichst optimale Verbindungswege zu einem mobilen Terminal einzurichten und den Datenverkehr ggf. in vorteilhafter Weise auf verschiedene Verbindungswege zu verteilen.

Eine Aufgabe der vorliegenden Erfindung war es nun, ein Mobilfunksystem bereitzustellen, das zumindest die Vorteile beider genannten Ansätze zeigt, gleichzeitig aber deren Nachteile überwindet.

Gelöst wird diese Aufgabe durch das erfindungsgemäße Mobilfunksystem gemäß Anspruch 1. Weitere bevorzugte Ausführungsformen sind in den entsprechenden Unteransprüchen genannt.

Gemäß Anspruch 1 wird ein heterogenes Mobilfunksystem zur Bereitstellung von Diensten aus einem Paketdatennetz für ein mobiles Terminal (MT) mit mindestens einem ersten Mobilfunknetz und einem zweiten Mobilfunknetz bereitgestellt, wobei die Mobilfunknetze jeweils mindestens einen Zugangsknoten zu dem Paketdatennetz aufweisen und der Zugangsknoten des zweiten Mobilfunknetzes nur mittelbar über den Zugangsknoten des ersten Mobilfunknetzes mit dem Paketdatennetz verbindbar ist. Dabei ist vom mobilen Terminal zum Zugangsnetzknoten des ersten Mobilfunknetzes ein erster PDP-Kontext des Paketdatendienstes GPRS vorgesehen. Weiterhin ist zwischen dem Zugangsnetzknoten des ersten Mobilfunknetzes und dem Zugangsnetzknoten des zweiten Mobilfunknetzes ein mittels eines Secondary-PDP-Kontextes des Paketdatendienstes GPRS aufzubauender Datentunnel vorgesehen. Darüber hinaus weist der Zugangsnetzknoten des ersten Mobilfunknetzes eine Paketverteilfunktion für Secondary-PDP-Kontexte des Paketdatendienstes GPRS zum Verteilen von ankommendem Datenverkehr zwischen dem ersten und dem zweiten Mobilfunknetz auf.

In einer bevorzugten Ausführungsform des heterogenen Mobilfunksystems handelt es sich bei dem Paketdatennetz um das öffentliche Internet.

Erfindungsgemäß wird nun mindestens ein erstes Mobilfunknetz mit einem zweiten Mobilfunknetz kombiniert, wobei beide Mobilfunknetze jeweils über mindestens einen Zugangsknoten zu einem Paketdatennetz, vorzugsweise zum Internet, verfügen. Im Falle, dass es sich bei dem ersten Mobilfunknetz um ein 2G/3G Mobilfunknetz handelt, wird der Zugangsknoten durch ein GGSN (Gateway GPRS Support Node) realisiert. Im zweiten Mobilfunknetz, beispielsweise ein WLAN, wird der Zugangsknoten mit den erfindungsgemäßen Funktionen als Local Mobility Agent (LMA) bezeichnet. Diese Zugangsknoten stellen über eine IP Routerfunktion ein Interface zu einem Paketdatennetz, vorzugsweise zu dem festen IP Netz, dar und fungieren als Access Router, d.h. sie terminieren Mobilfunk und Zugangstechnik spezifische Protokolle. Dabei können vorteilhafterweise auch IP Protokolle, insbesondere Mobile IP (MIP), angewendet werden. Erfindungsgemäß ist nun der Zugangsknoten des zweiten Mobilfunknetzes nicht direkt mit dem Paketdatennetz, vorzugsweise dem Internet, verbunden, sondern es werden alle Daten über den Zugangsknoten des ersten Mobilfunknetzes getunnelt.

Ferner ist in dem Zugangsknoten des ersten Mobilfunknetzes mindestens eine Agenten Funktion integrierbar. In einer bevorzugten Ausführungsform des erfindungsgemäßen Mobilfunksystems handelt es sich dabei um eine Home Agent Funktion, vorzugsweise um eine Routingfunktion. Somit wird die Routingfunktion vom Paketdatennetz, vorzugsweise des Internets in das erste Mobilfunknetz, vorzugsweise in ein 2G/3G Mobilfunknetz verlegt. Dadurch entfällt das Betreiben eines Home Agent in dem Paketdatennetz bzw. im Internet und die Zuordnung fester IP Adressen im Internet. Die IP Adresse im Mobilfunksystem kann bei einem Wechsel zwischen erstem und zweiten Mobilfunknetz beibehalten werden. Es kommt somit zu keiner Unterbrechung der Anwendungen. Das Routing ist wesentlich verbessert.

In einer bevorzugten Ausführungsform des erfindungsgemäßen heterogenen Mobilfunksystem stellt das erste Mobilfunknetz ein Overlay Netz des zweiten Mobilfunknetzes dar. Dabei ist auch in den Versorgungsgebieten des zweiten Mobilfunknetzes Versorgung durch das erste Mobilfunknetz gewährleistet. Besonders bevorzugt handelt es sich bei dem ersten Mobilfunknetz um ein 2G/3G Mobilfunknetz. Dabei wird eine Verbindung des ersten Mobilfunknetzes mit einem mobilen Terminal auch bei Nutzung des zweiten Mobilfunknetzes nicht aufgegeben, d.h. das mobile Terminal ist im ersten Mobilfunknetz "always on". Dem Wesen eines Overlay Netzes nach, ist es demanch möglich, ein oder mehrere Funktionen des ersten Mobilfunknetzes auch für das zweite Mobilfunknetz zu nutzen. So wird vorzugsweise eine Authentifizierungsfunktion des ersten Mobilfunknetzes, vorzugsweise eines 2G/3G Mobilfunknetzes für einen Teilnehmer des Mobilfunksystems und eine Vergebührungsfunktion des ersten Mobilfunknetzes, vorzugsweise eines 2G/3G Mobilfunknetzes für das zweite Mobilfunknetz, vorzugsweise ein WLAN, mitbenutzt. Dies hat den Vorteil, dass der Teilnehmer des Mobilfunksystems sich nicht mehrfach authentifizieren muss, d.h. auch wenn er beide Mobilfunknetze nutzen möchte, muss er sich bei einem Wechsel zwischen den beiden Mobilfunknetzen nicht nochmals neu authentifizieren. Zudem können dadurch alle Teilnehmer, die Zugang zu dem ersten Mobilfunknetz, vorzugsweise zu dem 2G/3G Mobilfunknetz haben, den Service des zweiten Mobilfunknetzes, vorzugsweise eines WLAN nutzen. Dabei kann es sich auch um Roamer aus anderen Mobilfunknetzen handeln, die Zugang zu dem ersten Mobilfunknetz haben. Ferner kann dadurch für das zweite Mobilfunknetz, vorzugsweise ein WLAN, kostengünstige Technik, insbesondere Internet-Technik, verwendet werden, da diese Technik keine Authentifizierungsfunktion und keine Vergebührungsfunktion aufweisen muss. Für den Netzwerkoperator des Mobilfunksystems ergibt sich keine oder wenig Änderung im Betreiber- bzw. Operations- Konzept. Das zweite Mobilfunksystem, vorzugsweise ein WLAN, kann nahtlos, d.h. unterbrechungs- und verlustfrei in das Gesamtsystem eingefügt werden. Da der gesamte Verkehr des zweiten Mobilfunknetzes auch über das erste Mobilfunknetz geleitet wird, sind im ersten Mobilfunknetz ausreichend Informationen vorhanden, um eine sehr flexible Vergebührung vornehmen zu können. So kann beispielsweise ein im zweiten Mobilfunknetz, vorzugsweise einem WLAN, übertragene Datenvolumen identisch zu einem im ersten Mobilfunknetz, vorzugsweise einem 2G/3G Mobilfunknetz, übertragene Datenvolumen vergebührt werden. Ferner kann es aber auch gebührenfrei oder zum Tarif eines Internet Service Providers vergebührt werden. In letzterem Fall können dadurch auch beliebige rechtliche Auflagen oder Business Cases erfüllt werden. Eine Authentifizierung und Autorisierung eines Teilnehmers für die Nutzung des zweiten Mobilfunknetzes kann im ersten Mobilfunknetz durchgeführt werden, indem die Anmeldung für das zweite Mobilfunknetz über das erste Mobilfunknetz erfolgt und indem der Zugangsknoten des ersten Mobilfunknetzes die zu registrierende Teilnehmeradresse (IP) auf Übereinstimmung mit der IP Adresse des Teilnehmers im ersten Mobilfunknetz vergleicht und auf das Vorhandensein eines entsprechenden PDP Kontextes im ersten Mobilfunknetz überprüft.

In einer weiteren bevorzugten Ausführungsform des heterogenen Mobilfunksystems können bei Nutzung einer Home Agent Funktion, insbesondere einer Mobile IP Home Agent Funktion spezifizierbare Daten wahlweise nur über das zweite Mobilfunknetz geleitet werden.

Bei Nutzung des GTP Protokolls kann der Datenpfad zwischen dem Zugangsknoten des zweiten Mobilfunknetzes und des ersten Mobilfunknetzes durch eine Verallgemeinerung des bestehenden "Secondary PDP Kontext" Konzeptes von GPRS realisiert werden, wobei die Paketverteilfunktion für Secondary PDP Kontexte genutzt wird, um auch Dateriverkehr zwischen dem ersten Mobilfunknetz und dem zweiten Mobilfunknetz zu verteilen, und wobei die Tunnel von GGSN aus gesehen unterschiedliche Zieladressen haben können.

Weiterhin schaltet bei Nutzung der Mobile IP Home Agenten Funktion im Zugangsknoten des ersten Mobilfunknetzes dieser nicht nur den gesamten Verkehr zwischen dem ersten und dem zweiten Mobilfunknetz um, sondern es können auch entsprechend einer eventuell vorgesehenen Verkehrsklassifizierung nur bestimmte Datensätze über das zweite Mobilfunknetz geleitet werden. Dies entspricht einer Erweiterung von MIP.

Ferner kann vorzugsweise für die Signalisierung des Verbindungsaufbaus zwischen dem Zugangsknoten des zweiten Mobilfunknetzes und des ersten Mobilfunknetzes die Mobile IP Registrierung erweitert werden und zwar um Session spezifische Daten des PDP Kontextes des ersten Mobilfunknetzes, wie beispielsweise um Teilnehmer und Kontext Identitäten, und um Session spezifische Daten für den Tunnelaufbau zwischen dem Zugangsknoten des zweiten Mobilfunknetzes und des ersten Mobilfunknetzes, wie beispielsweise Datenstromcharakteristiken zur Verkehrsklassifizierung, wie im TFT von GPRS. So kann beispielsweise für Voice over IP oder Multimedia Verbindungen das zweite Mobilfunknetz verwendet werden, während für den restlichen Datenverkehr das erste Mobilfunksystem verwendet werden kann.

Vorteilhafterweise nimmt der erste Zugangsknoten eine Kopplung des PDP Kontextes zum zweiten Mobilfunknetz mit einem Kontext im ersten Mobilfunknetz vor. Zudem erlaubt er vorzugsweise den Kontext im zweiten Mobilfunknetz nur, wenn mindestens ein Kontext im ersten Mobilfunknetz besteht.

Vorzugsweise ist in dem Zugangsknoten des zweiten Mobilfunknetzes eine Steuerfunktion vorhanden, die bewirkt, dass von dem zweiten Mobilfunknetz zu verschickende Datenpakete ausschließlich zu dem Zugangsknoten des ersten Mobilfunknetzes transportiert werden. Dies kann beispielsweise durch Verwendung spezieller IP Adressen für die Tunnelendpunkte zwischen dem ersten und dem zweiten Mobilfunknetz realisiert werden. Ferner können spezielle Adressvergabetechniken für mobile Teilnehmer im zweiten Mobilfunknetz eingesetzt werden. Darüber hinaus kann dies auch durch einen Test der Tunnelzieladresse des Zugangsknotens des ersten Mobilfunknetzes im Zugangsknoten des zweiten Mobilfunknetzes auf vordefinierte Zugangsadressen kontrolliert werden.

Das zweite Mobilfunknetz kann von dem Operator des ersten Mobilfunknetzes betrieben werden oder aber von einem anderen Betreiber. Auch im zweiten Fall muss der Betreiber des zweiten Mobilfunknetzes keine Teilnehmerverwaltung, d.h. keine Authentifizierungsfunktion bereitstellen oder eine Teilnehmervergebührung durchführen. Zur Abrechnung mit dem Operator des ersten Mobilfunknetzes kann beispielsweise eine Art Interoperator Charging, etwa über das gesamte für den Netzwerkoperator des ersten Mobilfunknetzes transportierte Datenvolumen durchgeführt werden.

Im Falle der Kombination eines 2G/3G Mobilfunknetzes als erstes Mobilfunknetz mit einem WLAN Mobilfunknetz als zweites Mobilfunknetz kann die gesamte Verbindung von einem mobilen Terminal (MT) zu einem GGSN des 2G/3G Mobilfunknetzes, inclusive der Verbindung über das WLAN als eine Erweiterung des GPRS Secondary PDP Kontext implementiert werden. Darunter versteht man die Möglichkeit eines Mobilen Terminals, mit einer IP Adresse mehrere Verbindungen zum GGSN aufbauen zu können. Diese können sich dann insbesondere in der Servicequlität, der sogenannten "Quality of Service" (QoS), wie beispielsweise der garantierten Bandbreite unterscheiden. So kann in einem ersten Kontext Standard Internet Verkehr wie WEB Browsen und E-Mail abgewickelt werden und in einem zweiten (Secondary) Kontext eine Voice over IP Telefonie Verbindung. Dadurch ergeben sich für das 2G/3G Mobilfunknetz nur wenige technische Änderungen, beispielsweise im GGSN.

Das erfindungsgemäße heterogene Mobilfunksystem benötigt keine neuen Protokolle. Es kann mit bereits bekannten Protokollen wie beispielsweise mit MIP und/oder GTP arbeiten. Insbesondere kann die Steuerung zwischen einem mobilen Terminal und den jeweiligen Zugangsknoten ausschließlich mit Mobile IP erfolgen. Dadurch kann die Steuerung mit Standard IETF Techniken ermöglicht werden und bedarf keiner System spezifischer Änderungen.

Da im Falle, dass das Mobilfunknetz ein Overlay Netz des zweiten Mobilfunknetzes ist, die Verbindung des ersten Mobilfunknetzes mit einem mobilen Terminals auch bei Nutzung des zweiten Mobilfunknetzes nicht aufgegeben wird, können sicherheitsrelevante Daten weiterhin über das erste Mobilfunknetz übertragen werden. Während beispielsweise Internet-Downloads über das zweite Mobilfunknetz, vorzugsweise ein WLAN, erfolgen wird auch die Unsymmetrie des Verkehrs in Downlink Richtung vom ersten Mobilfunknetz, vorzugsweise einem 2G/3G Mobilfunknetz genommen.

Ferner betrifft die vorliegende Erfindung auch ein entsprechendes Verfahren zur Bereitstellung von Diensten aus einem Paketdatennetz für ein mobiles Terminal eines Mobilfunksystems, wobei das Verfahren mindestens die folgenden Schritte aufweist:
a. Bereitstellen von mindestens einem ersten und einem zweiten Mobilfunknetz mit jeweils mindestens einem Zugangsknoten zu dem Paketdatennetz;
b. Kombinieren der Mobilfunknetze derart, dass Datenpakete zwischen dem zweiten Mobilfunknetz und dem Paketdatennetz nur mittelbar über den Zugangsknoten des ersten Mobilfunknetzes transportiert werden können.

Vorzugsweise werden durch eine Steuerfunktion in dem Zugangsknoten des zweiten Mobilfunknetzes von dem zweiten Mobilfunknetz zu verschickende Datenpakete ausschließlich zu dem Zugangsknoten des ersten Mobilfunknetzes transportiert.

Weiter war es eine Aufgabe der Erfindung ein mobiles Terminal zur Nutzung eines heterogenen Mobilfunksystems mit mindestens einem ersten Mobilfunknetz und einem zweiten Mobilfunknetz bereitzustellen.

Gelöst wird diese Aufgabe durch den unabhängigen Anspruch 13. Weitere Vorteile des erfindungsgemäßen mobilen Terminals sind in den Unteransprüchen 14 und 15 aufgeführt.

Gemäß Anspruch 13 wird erfindungsgemäß ein mobiles Terminal zur Nutzung eines heterogenen Mobilfunksystems mit mindestens einem ersten Mobilfunknetz und einem zweiten Mobilfunknetz bereitgestellt, wobei das Mobile Terminal gleichzeitig Verbindungen zu dem ersten und dem zweiten Mobilfunknetz unterhalten kann.

Vorzugsweise kann das mobile Terminal wahlweise Daten über das erste und/oder über das zweite Mobilfunknetz übertragen.

Vorteilhafterweise unterhält ein Teilnehmer des heterogenen Mobilfunknetzes gleichzeitig eine Verbindung im ersten und im zweiten Mobilfunknetz. Dadurch können im Falle eines Handovers keine Daten verloren gehen. Die dafür sonst übliche Datenweiterleitungsfunktion im Mobilfunknetz bei einem Handover ist hier nicht notwendig, da das mobile Terminal diese Funktion übernehmen kann. Das Umschalten von Datenströmen aus dem ersten Mobilfunknetz in das zweite Mobilfunknetz und umgekehrt das Übertragungsende wird im jeweiligen Mobilfunknetz signalisiert, um dem mobilen Terminal die Reihenfolgensicherung der Daten zu erleichtern.

In einer weiteren vorzugsweisen Ausführungsform des mobilen Terminals können in dem mobilen Terminal über das erste bzw. zweite Mobilfunknetz transportierte Datenströme zusammengefasst werden.

Vorzugsweise werden über das erste bzw. zweite Mobilfunknetz transportierte Datenströme in dem mobilen Terminal zusammengefasst. Dadurch reduziert sich die Handoverfunktion des Mobilfunksystems erheblich. Da vorzugsweise die Verbindung zwischen dem ersten Mobilfunknetz und dem mobilen Terminal nicht aufgegeben wird, findet nur ein partielles Handover zwischen dem ersten und dem zweiten Mobilfunknetz statt, wodurch die Menge der Daten, die zwischen den Mobilfunknetzen übergeben werden müssen minimal sind und die Handover Signalisierung sich stark vereinfacht.

Der Gegenstand der Erfindung betrifft im wesentlichen das Einbetten eines zweiten alternativen Mobilfunknetzes in ein erstes Mobilfunknetz, vorzugsweise in ein 2G/3G Mobilfunknetz, wie beispielsweise GPRS.
Die Vorteile der vorliegenden Erfindung sind zusammengefasst insbesondere darin zu sehen, dass es bei dem erfindungsgemäßen heterogenen Mobilfunksystem nur zu einem partiellen Handover zwischen den Mobilfunknetzen kommt. Die Handover Funktionen werden in das mobile Terminal verlegt. In der Erfindung kann eine Verallgemeinerung des Konzeptes des Secondary PDP Kontextes realisiert werden. Ferner wird vorzugsweise eine Home Agent Funktion mit einem Zugangsknoten, vorzugsweise mit einem GGSN kombiniert. Ferner wird vorzugsweise erfindungsgemäß mit dem Zugangsknoten des zweiten Mobilfunknetzes eine Steuerfunktion kombiniert, die das Routen von Datenpaketen zu dem Zugangsknoten des ersten Mobilfunknetzes erzwingt.

Weitere Vorteile des erfindungsgemäßen heterogenen Mobilfunksystem und des erfindungsgemäßen Verfahrens werden anhand der folgenden Figuren erläutert. Es zeigen:
- Fig. 1: Schematische Darstellung eines erfindungsgemäßen heterogenen Mobilfunksystems mit Verbindung zum Internet;
- Fig. 2: Detaillierte schematische Darstellung eines weiteren erfindungsgemäßen heterogenen Mobilfunksystems mit Verbindung zum Internet.

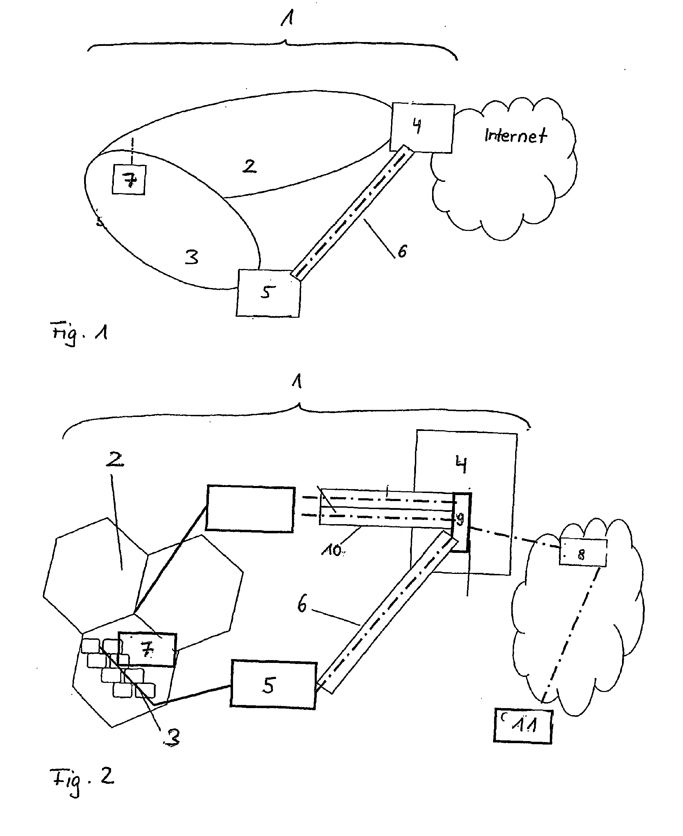

Figur 1 zeigt ein erfindungsgemäßes heterogenes Mobilfunksystem 1, das ein erstes Mobilfunknetz 2, vorzugsweise ein 2G/3G Mobilfunknetz, wie beispielsweise ein GSM- und/oder UMTS-GPRS, und ein zweites Mobilfunknetz 3, wie beispielsweise ein WLAN, aufweist. Das erste Mobilfunknetz 2 weist einen Zugangsknoten 4, im Falle eines GSM- und/oder UMTS-GPRS einen GGSN auf. In diesem ist eine Home Agent Funktion integriert. Das zweite Mobilfunknetz 3 weist ebenfalls einen Zugangsknoten 5 auf. Beide Zugangsknoten 4, 5 fungieren als Access Router. Zwischen den Zugangsknoten 4 und 5 ist ein Datentunnel 6 aufgebaut. Um diesen Datentunnel 6 aufbauen zu können, muss ein mobiles Terminal 7 dem Zugangsknoten 5 des zweiten Mobilfunknetzes 3 die Adresse des Zugangsknotens 4 des ersten Mobilfunknetzes 2 mitteilen. Es gibt dabei verschiedene Möglichkeiten. Zum einen kann der Zugangsknoten 4 des ersten Mobilfunknetzes 2, beispielsweise ein GGSN seine Adresse bzw. die Home Agent Adresse über das erste Mobilfunknetz 3, vorzugsweise einem 2G/3G Mobilfunknetz, mit MIP verteilen, was als Home Agent Advertisement bezeichnet wird, oder das mobile Terminal 7 kann mit MIP die Adresse abfragen, eine sogenannte Home Agent solicitation. In letzterem Fall beantwortet der Zugangsknoten 4, vorzugsweise der GGSN diese Abfrage mit seiner Adresse selbst und verteilt diese nicht weiter an andere Router. Der Informationsaustausch zwischen dem Zugangsknoten 4 und dem mobilen Terminal 7 kann auch mit anderen Protokollen bzw. Protokollerweiterungen erfolgen. Ferner kann aber die Adresse des Zugangsknotens 4 auch Bestandteil von im mobilen Terminal 7 abgespeicherten PDP Kontext Daten sein. Es ist auch vorstellbar, dass das mobile Terminal 7 nur die Adresse eines das Terminal 7 bedienenden Knotens des ersten Mobilfunknetzes 2 kennt, der aber wiederum die Adresse des Zugangsknotens 4 kennt. Das mobile Terminal 7 schickt die Adresse des das Terminal 7 bedienenden Knotens dem Zugangsknoten 5 und dieser fragt den bedienenden Knoten des ersten Mobilfunknetzes nach der Adresse des Zugangsknotens 4.

In Figur 2 ist eine detaillierte Darstellung eines weiteren erfindungsgemäßen heterogenen Mobilfunksystem gezeigt. Anhand von Figur 2 werden nun im folgenden zwei Varianten für das erfindungsgemäße Mobilfunksystem aufgezeigt.

In der ersten Variante wird eine Paketverteilerfunktion 9 in einem Zugangsknoten 4 des ersten Mobilfunknetzes 2, vorzugsweise in einem GGSN, als Erweiterung des Secondary PDP Kontext Konzeptes von GPRS realisiert. Ein Mobiles Terminal 7 bucht sich in dem ersten Mobilfunknetz 2, im gezeigten Fall in ein 2G/3G Mobilfunknetz ein. Ferner hat das Mobile Terminal 7 wenigstens einen PDP Kontext zu einem Internet Service Provider 8 aufgebaut, aus dessen Adressbereich es eine IP Adresse (im folgenden: IP-mt) erhält. Dieser Kontext wird als "always on" angesehen, um die Erreichbarkeit des Mobilen Terminals 7 zu gewährleisten und wenigstens Signalisierungsnachrichten für bestimmte Services mit dem Internet austauschen zu können. Für dieselbe IP Adresse kann das Mobile Terminal 7 weitere Secondary PDP Kontexte aufbauen, um beispielsweise für bestimmte Dienste eine Bandbreite insbesondere am Radiointerface zu reservieren. Der Verkehr, der für einen Secondary PDP Kontext bestimmt ist, wird dabei mit einem Traffic Flow Template beschrieben. Dies ist ein Parametersatz der bestimmte Datenströme charakterisiert und einer Paketverteilerfunktion 9 im GGSN erlaubt, die Datenpakete entsprechend zu klassifizieren und den jeweiligen Datenströmen, d.h. (secondary) PDP Kontexten zuzuordnen. Das Mobile Terminal 7 erkennt das Vorhandensein eines zweiten alternativen Mobilfunknetzes 3 und entscheidet, dieses zu nutzen. Dazu stellt das Mobile Terminal 7 eine Verbindung zu dem Zugangsknoten 5 des zweiten Mobilfunknetzes 3 her. Bei letzterem handelt es sich im vorliegenden Fall um ein WLAN, der Zugangsknoten 5 wird dabei als Local Mobility Agent (LMA) bezeichnet. Von dort erhält es eine IP Adresse. Das Mobile Terminal 7 signalisiert einer Paketverteilerfunktion 9 im GGSN 4, dass es den Internetservice für seine IP Adresse IP-mt über das zweite Mobilfunknetz 3 realisieren möchte. Das kann sowohl über das 2G/3G Mobilfunknetz 2 als auch über das WLAN 3 erfolgen. Bei einer Signalisierung über das WLAN 3 signalisiert das mobile Terminal 7 einen Request mit MIP oder anderen Protokollen zum LMA 5, welcher diesen Request in eine sogenannte Create PDP Kontext Request Nachricht umsetzt. Um die benötigten Sessionparameter zum Aufbau des PDP Kontextes vom LMA 5 zum GGSN 4 dem LMA 5 bereitzustellen kann der Mobile IP Request mit einer Session spezifischen Erweiterung ergänzt werden. Dabei gibt er als Zieladressen für die Tunnelendpunkte den GGSN 4 und seine eigenen Adresse an. Dadurch wird die Verbindung zwischen LMA 5 und GGSN 4 aufgebaut. Bei einer Signalisierung über das 2G/3G Mobilfunknetz 2 werden Steuernachrichten des 2G/3G Mobilfunknetzes 2 verwendet. Dazu müssen die vorhandenen Mechanismen, beispielsweise ein Activate Secondary PDP Kontext, erweitert werden, um die Adresse des LMA 5 zum GGSN 4 übertragen zu können und einem entsprechenden Dienstenetzknoten des 2G/3G Mobilfunknetzes 2 anzuzeigen, dass kein neuer Kontext aufgebaut werden soll. Sodann baut der GGSN 4 zum LMA 5 einen neuen Tunnel 6 mit entsprechender Tunnelendpunktadresse auf. Dieser Tunnel 6 kann als Einkapselungstechnik das GTP Protokoll verwenden, was das geringste Maß an zu ändernden GGSN Funktionen darstellt. Der gesamte Downlink Verkehr wird danach über diesen Tunnel 6 geleitet. Zur Vereinfachung der Datenkoordination im Mobilen Terminal 7 kann auf dem alten Datenpfad 10 eine End of Service Signalisierung erfolgen. Der GGSN 4 führt die Vergebührung für den neuen Datenpfad, d.h. über den Tunnel 6, extra gekennzeichnet durch, beispielsweise als eine neue QoS Klasse. Sobald der neue Datenpfad über den Tunnel 6 aufgebaut ist, kann er von dem Mobilen Terminal 7 auch für den Uplink Verkehr genutzt werden. Der LMA 5 tunnelt alle Uplink Daten zum GGSN 4. Durch entsprechendes Setzen eines Traffic Flow Templates kann durch das Mobile Terminal 7 gesteuert werden, ob alle oder nur ein bestimmter Teil der Daten vom GGSN 4 zum Terminal 7 über das Mobilfunknetze 2 übertragen werden.

In der zweiten Variante wird eine Paketverteilerfunktion 9 im GGSN 4 durch einen integrierten Home Agent 9 realisiert, welcher ein direktes Interface zu den GPRS Funktionen des GGSN 4 hat. Das Mobile Terminal 7 ist im 2G/3G Mobilfunknetz 2 eingebucht und hat wenigstens einen PDP Kontext zu einem Internet Service Provider 8 aufgebaut, aus dessen Adressbuch es eine IP Adresse (im folgenden: IP-mt) erhält. Dieser Kontext wird wiederum als, "always on" angesehen, um die Erreichbarkeit des Mobilen Terminals 7 zu gewährleisten und wenigstens Signalisierungsinformationen für bestimmte Services mit dem Internet auszutauschen. Für dieselbe IP Adresse kann das Mobile Terminal 7 weitere Secondary PDP Kontexte aufbauen, um beispielsweise für bestimmte Dienste eine Bandbreite, insbesondere am Radiointerface zu reservieren. Die IP-mt wird automatisch im integrierten Home Agent 9 als Home Adress eingetragen. Das Mobile Terminal 7 erkennt das Vorhandensein eines zweiten alternativen Mobilfunknetzes 3 und entscheidet, dieses zu nutzen. Dazu stellt es eine Verbindung zu dem LMA 5 her. Von dort erhält es eine IP Adresse. Das Mobile Terminal 7 signalisiert einem Paketverteiler 9 bzw. dem Home Agent 9 im GGSN 4, dass es den Internetservice für seine IP-mt über den LMA 5 realisieren möchte. Das kann sowohl über das 2G/3G Mobilfunknetz 2 wie auch über das WLAN 3 erfolgen.'Die Signalisierung über das WLAN 3 zum LMA 5 erfolgt, wie bereits in der ersten Variante beschrieben. Vom LMA 5 zum GGSN 4 wird vorzugsweise Mobile IP verwendet. Bei der Signalisierung über das 2G/3G Mobilfunknetz 2 kann ein MIP Request als normaler L3 IP Verkehr verschickt werden, wobei die Home Agent Adresse der GGSN Adresse entspricht. Dabei ist ein Vorteil gegenüber der Signalisierung über das WLAN 3, dass ein geschützter und authentifizierter Weg genutzt wird. Der GGSN 4 muss an ihn gerichtete MIP Nachrichten aus dem Nutzerdatenstrom herausfiltern und dem internen Home Agent 9 zustellen. Indem der GGSN 4 einen Test durchführt, ob die im MIP HA-Registrierungs-Request verwendete Teilnehmer Home Adress mit der IP Adresse des verwendeten PDP Kontextes übereinstimmt, ist in einfacher Weise die Authentifizierungs- und Autorisierungsfunktion realisiert. Im Falle, dass die Signalisierung des mobilen Terminals 7 über das WLAN 3 erfolgte, muss der GGSN 4 prüfen, ob für das Mobile Terminal 7 ein gültiger PDP Kontext vorhanden ist und das Mobile Terminal 7 und damit seine IP-mt authentifiziert und berechtigt ist, einen gewünschten Service in Anspruch zu nehmen. Im Mobile IP Registrierungs Request sollten neben der IP Adresse weitere Identitäten des Mobilen Teilnehmers vorhanden sein, um zu verhindern, dass die IP Adresse durch nicht autorisierte Teilnehmer verwendet wird. Der integrierte Home Agent 9 baut einen MIP Tunnel 6 als neuen Datenpfad zum LMA 5 auf. Der gesamte Downlink Verkehr oder bestimmte Datenströme entsprechend Traffic Flow Template werden danach über diesen Tunnel 6 geleitet. Zur Vereinfachung der Datenkoordination im Mobilen Terminal 7 kann auf dem alten Datenpfad 10 eine End of Service Signalisierung erfolgen. Der GGSN 4 führt die Vergebührung für den neuen Datenpfad, d.h. über den Tunnel 6, extra gekennzeichnet durch, beispielsweise als eine neue QoS Klasse. Sobald der neue Datenpfad über den Tunnel 6 aufgebaut ist, kann er von dem Mobilen Terminal 7 auch für den Uplink Verkehr genutzt werden. Der LMA 5 tunnelt alle Uplink Daten zum GGSN 4. Der LMA 5 muss zusätzlich zur Funktion eines Foreign Agent, welcher den Downlink Verkehr entkapselt, auch den gesamten Uplink Verkehr einkapseln und im Tunnel 6 zum GGSN 4 bzw. zum integrierten Home Agent 9 schicken, um dort eine vollständige Vergebührung zu ermöglichen. Diese Funktion wird als reverse Tunneling bezeichnet. Gleichzeitig muss es verhindern, dass das Mobile Terminal 7 eine Routenoptimierung durchführt und dabei ein direktes Routing zwischen dem LMA 5 und einem Correspondent Host 11 ohne Passierung des GGSN 4 bzw. des Home Agent 9 ermöglicht. Das kann dadurch erreicht werden, dass die entsprechenden MIP Nachrichten durch Routenoptimierung des Mobilen Terminals 7 durch den LMA 5 verworfen oder negativ quittiert werden.

## Patentansprüche

1. Heterogenes Mobilfunksystem (1) zur Bereitstellung von Diensten aus einem Paketdatennetz für ein mobiles Terminal (7) mit mindestens einem ersten Mobilfunknetz (2) und einem zweiten Mobilfunknetz (3),
- wobei die Mobilfunknetze (2, 3) jeweils mindestens einen Zugangsnetzknoten (4, 5) zu dem Paketdatennetz aufweisen und der Zugangsnetzknoten (5) des zweiten Mobilfunknetzes (3) nur mittelbar über den Zugangsnetzknoten (4) des ersten Mobilfunknetzes (2) mit dem Paketdatennetz verbindbar ist,
**dadurch gekennzeichnet,**
- **dass** ein erster PDP-Kontext des Paketdatendienstes GPRS vom mobilen Terminal (7) zum Zugangsnetzknoten (4) des ersten Mobilfunknetzes (2) vorgesehen ist,
- **dass** zwischen dem Zugangsnetzknoten (4) des ersten Mobilfunknetzes (2) und dem Zugangsnetzknoten (5) des zweiten Mobilfunknetzes (3) ein mittels eines Secondary-PDP-Kontextes des Paketdatendienstes GPRS aufzubauender Datentunnel (6) vorgesehen ist, und
- **dass** im Zugangsnetzknoten (4) des ersten Mobilfunknetzes (2) eine Paketverteilfunktion (9) für Secondary-PDP-Kontexte des Paketdatendienstes GPRS zum Verteilen von ankommendem Datenverkehr zwischen dem ersten und dem zweiten Mobilfunknetz vorgesehen ist.

2. Heterogenes Mobilfunksystem nach Anspruch 1,
**dadurch gekennzeichnet,**
**dass** das erste Mobilfunknetz (2) ein 2G/3G Mobilfunknetz ist und/oder das zweite Mobilfunknetz (3) ein lokales Übermittlungsnetz, insbesondere ein WLAN ist.

3. Heterogenes Mobilfunksystem nach Anspruch 1 oder 2,
**dadurch gekennzeichnet,**
**dass** das Paketdatennetz das Internet ist.

4. Heterogenes Mobilfunksystem nach Anspruch 2 oder 3,
**dadurch gekennzeichnet,**
**dass** der Datentunnel zwischen dem Zugangsnetzknoten des 2G/3G Mobilfunknetzes und dem Zugangsnetzknoten des zweiten Mobilfunknetzes auf Basis existierender Protokolle, insbesondere GTP und/oder MIP realisiert wird.

5. Verfahren zur Bereitstellung von Diensten aus einem Paketdatennetz für ein mobiles Terminal (7) eines Mobilfunksystems, wobei das Verfahren die folgenden Schritte aufweist:
a. Bereitstellen von mindestens einem ersten (2) und einem zweiten (3) Mobilfunknetz mit jeweils mindestens einem Zugangsnetzknoten (4, 5) zu dem Paketdatennetz, und
b. Kombinieren der Mobilfunknetze (2, 3) derart, dass Datenpakete zwischen dem zweiten Mobilfunknetz (3) und dem Paketdatennetz nur mittelbar über den Zugangsnetzknoten (4) des ersten Mobilfunknetzes (2) transportiert werden können,
**gekennzeichnet durch die weiteren Schritte:**
c. Aufbauen eines ersten PDP-Kontextes des Paketdatendienstes GPRS vom mobilen Terminal (7) zum Zugangsnetzknoten (4) des ersten Mobilfunknetzes (2),
d. Aufbauen eines Datentunnels (6) zwischen dem Zugangsnetzknoten (4) des ersten Mobilfunknetzes und dem Zugangsnetzknoten (5) des zweiten Mobilfunknetzes mittels eines Secondary-PDP-Kontextes des Paketdatendienstes GPRS,
e. Verteilen von im Zugangsnetzknoten (4) des ersten Mobilfunknetzes (2) ankommenden Datenverkehrs mittels einer Paketverteilfunktion (9) für Secondary-PDP-Kontexte des Paketdatendienstes GPRS zwischen dem ersten und dem zweiten Mobilfunknetz.

6. Verfahren nach Anspruch 5,
**dadurch gekennzeichnet,**
**dass** eine Vergebührung für eine Nutzung des zweiten Mobilfunknetzes im ersten Mobilfunknetz durchgeführt wird.

7. Verfahren nach einem der Ansprüche 5 oder 6,
**dadurch gekennzeichnet,**
**dass** eine Authentifizierung und Autorisierung eines Teilnehmers für eine Nutzung des zweiten Mobilfunknetzes im ersten Mobilfunknetz durchgeführt wird.

## Claims

1. Heterogeneous mobile radio system (1) for provision of services from a packet data network for a mobile terminal (7) having at least one first mobile radio network (2) and one second mobile radio network (3),
- with the mobile radio networks (2, 3) each having at least one access network node (4, 5) to the packet data network, and in which case the access network node (5) for the second mobile radio network (3) can be connected to the packet data network only indirectly via the access network node (4) for the first mobile radio network (2),
**characterized in that**
- a first PDP context for the packet data service GPRS is provided from the mobile terminal (7) to the access network node (4) for the first mobile radio network (2),
- **in that** a data tunnel (6) to be set up by means of a secondary PDP context for the packet data service GPRS is provided between the access network node (4) for the first mobile radio network (2) and the access network node (5) for the second mobile radio network (3), and
- **in that** a packet distribution function (9) for secondary PDP contexts for the packet data service GPRS is provided in the access network node (4) for the first mobile radio network (2) for the distribution of incoming data traffic between the first and the second mobile radio network.

2. Heterogeneous mobile radio system according to Claim 1,
**characterized**
**in that** the first mobile radio network (2) is a 2G/3G mobile radio network, and/or the second mobile radio network (3) is a local transmission network, in particular a WLAN.

3. Heterogeneous mobile radio system according to Claim 1 or 2,
**characterized**
**in that** the packet data network is the Internet.

4. Heterogeneous mobile radio system according to Claim 2 or 3,
**characterized**
**in that** the data tunnel between the access network node for the 2G/3G mobile radio network and the access network node for the second mobile radio network is implemented on the basis of existing protocols, in particular GGP and/or MIP.

5. Method for provision of services from a packet data network for a mobile terminal (7) in a mobile radio system, with the method having the following steps:
a. provision of at least one first (2) and one second (3) mobile radio network, each having at least one access network node (4, 5) to the packet data network; and
b. combination of the mobile radio networks (2, 3) such that data packets can be transported between the second mobile radio network (3) and the packet data network only indirectly via the access network node (4) for the first mobile radio network (2),
**characterized by** the further steps:
c. formation of a first PDP context for the packet data service GPRS from the mobile terminal (7) to the access network node (4) for the first mobile radio network (2),
d. formation of a data tunnel (6) between the access network node (4) for the first mobile radio network and the access network node (5) for the second mobile radio network by means of a secondary PDP context for the packet data service GPRS,
e. distribution of data traffic incoming in the access network node (4) for the first mobile radio network (2), by means of a packet distribution function (9) for secondary PDP contexts for the packet data service GPRS between the first and the second mobile radio network.

6. Method according to Claim 5,
**characterized**
**in that** charging for use of the second mobile radio network is carried out in the first mobile radio network.

7. Method according to one of Claims 5 or 6,
**characterized**
**in that** authentication and authorization of a subscriber for use of the second mobile radio network are carried out in the first mobile radio network.

## Revendications

1. Système radio mobile hétérogène (1) pour mettre à disposition des services provenant d'un réseau de données par paquets pour un terminal mobile (7), comportant au moins un premier réseau radio mobile (2) et un deuxième réseau radio mobile (3),
- les réseaux radio mobiles (2, 3) présentant chacun au moins un noeud d'accès (4, 5) au réseau de données par paquets et le noeud d'accès (5) du deuxième réseau radio mobile (3) ne pouvant être relié au réseau de données par paquets que de manière indirecte via le noeud d'accès (4) du premier réseau radio mobile (2),
**caractérisé en ce que**
- un premier contexte PDP du service de données par paquets GPRS est prévu du terminal mobile (7) vers le noeud d'accès (4) du premier réseau radio mobile (2),
- un tunnel de données (6) à établir au moyen d'un contexte PDP secondaire du service de données par paquets GPRS est prévu entre le noeud d'accès (4) du premier réseau radio mobile (2) et le noeud d'accès (5) du deuxième réseau radio mobile (3) et
- dans le noeud d'accès (4) du premier réseau radio mobile (2) est prévue une fonction de distribution de paquets (9) pour des contextes PDP secondaires du service de données par paquets GPRS pour distribuer le trafic de données entrant entre le premier réseau radio mobile et le deuxième réseau radio mobile.

2. Système radio mobile hétérogène selon la revendication 1, **caractérisé en ce que** le premier réseau radio mobile (2) est un réseau radio mobile 2G/3G et/ou le deuxième réseau radio mobile (3) est un réseau de transmission local, en particulier un WLAN.

3. Système radio mobile hétérogène selon la revendication 1 ou 2, **caractérisé en ce que** le réseau de données par paquets est l'Internet.

4. Système radio mobile hétérogène selon la revendication 2 ou 3, **caractérisé en ce que** le tunnel de données entre le noeud d'accès du réseau radio mobile 2G/3G et le noeud d'accès du deuxième réseau radio mobile est réalisé sur la base de protocoles existants, en particulier le GTP et/ou le MIP.

5. Procédé pour mettre à disposition des services provenant d'un réseau de données par paquets pour un terminal mobile (7) d'un système radio mobile, ce procédé comportant les étapes suivantes:
a. mise à disposition d'au moins un premier réseau radio mobile (2) et un deuxième réseau radio mobile (3) avec chacun au moins un noeud d'accès (4, 5) au réseau de données par paquets et
b. combinaison des réseaux radio mobiles (2, 3) de manière telle que des paquets de données ne peuvent être transportés entre le deuxième réseau radio mobile (3) et le réseau de données par paquets que de manière indirecte via le noeud d'accès (4) du premier réseau radio mobile (2),
**caractérisé par** les étapes supplémentaires suivantes:
c. établissement d'un premier contexte PDP du service de données par paquets GPRS du terminal mobile (7) vers le noeud d'accès (4) du premier réseau radio mobile (2),
d. établissement d'un tunnel de données (6) entre le noeud d'accès (4) du premier réseau radio mobile et le noeud d'accès (5) du deuxième réseau radio mobile au moyen d'un contexte PDP secondaire du service de données par paquets GPRS,
e. distribution du trafic de données entrant dans le noeud d'accès (4) du premier réseau radio mobile (2) au moyen d'une fonction de distribution de paquets (9) pour des contextes PDP secondaires du service de données par paquets GPRS entre le premier réseau radio mobile et le deuxième réseau radio mobile.

6. Procédé selon la revendication 5, **caractérisé en ce qu'**une facturation d'une utilisation du deuxième réseau radio mobile est effectuée dans le premier réseau radio mobile.

7. Procédé selon l'une des revendications 5 ou 6, **caractérisé en ce qu'**une authentification et une autorisation d'un usager aux fins d'utiliser le deuxième réseau radio mobile sont effectuées dans le premier réseau radio mobile.
